# EUROPÄISCHE PATENTSCHRIFT

(11) **EP 0 890 589 B1**
(45) Veröffentlichungstag und Bekanntmachung des Hinweises auf die Patenterteilung: **13.11.2002**
(21) Anmeldenummer: 98111801.1
(22) Anmeldetag: 26.06.1998
(51) Int. Cl.: C08F 210/00, C08F 210/02, C10M 145/08, C10L 1/18

(54) **Lösungen oder Dispersionen auf Basis von Copolymere von Olefinen und ungesättigten Carbonsäureestern und ihre Verwendung als Mineralöladditive**
Solutions or dispersions based on copolymers of olefins and unsaturated carboxylic esters and their use as additives for mineral oils
Solutions ou dispersions à base de copolymres d'oléfines et d'esters d'acides carboxyliques non saturés et leur utilisation comme additifs pour des huiles minérales

(30) Priorität: 08.07.1997 DE 19729057
(43) Veröffentlichungstag der Anmeldung: 13.01.1999
(73) Patentinhaber: Clariant GmbH, 65929 Frankfurt am Main (DE)
(72) Erfinder: Krull, Matthias, Dr., 46147 Oberhausen (DE); Kupetz, Markus, 46539 Dinslaken (DE); Wildfang, Raimund, 46147 Oberhausen (DE)

(56) Entgegenhaltungen:
- EP-A- 0 320 766
- EP-A- 0 493 769
- EP-A- 0 584 651
- US-A- 4 129 714

## Beschreibung

Die vorliegende Erfindung betrifft Lösungen oder Dispersionen mit einem Gehalt von 1-90 Gew-% an Copolymeren aus Ethylen und Vinylestern tertiärer Carbonsäuren sowie deren Verwendung als Fließverbesserer für Mineralöle.

Rohöle und durch Destillation von Rohölen gewonnene Mitteldestillate wie Gasöl, Dieselöl oder Heizöl, enthalten je nach Herkunft der Rohöle unterschiedliche Mengen an n-Paraffinen, die bei Erniedrigung der Temperatur als plättchenförmige Kristalle auskristallisieren und teilweise unter Einschluß von Öl agglomerieren. Dadurch kommt es zu einer Verschlechterung der Fließeigenschaften dieser Öle bzw. Destillate, wodurch beispielsweise bei Gewinnung, Transport, Lagerung und/oder Einsatz der Mineralöle und Mineralöldestillate Störungen auftreten können. Bei Mineralölen kann dieses Kristallisationsphänomen beim Transport durch Rohrleitungen vor allem im Winter zu Ablagerungen an den Rohrwänden, in Einzelfällen, z.B. bei Stillstand einer Pipeline, sogar zu deren völliger Verstopfung führen. Auch bei der Lagerung und Weiterverarbeitung der Mineralöle kann die Ausfällung von Paraffinen Schwierigkeiten verursachen. So kann es im Winter unter Umständen erforderlich sein, die Mineralöle in beheizten Tanks zu lagern. Bei Mineralöldestillaten können als Folge der Kristallisation Verstopfung der Filter in Dieselmotoren und Feuerungsanlagen auftreten, wodurch eine sichere Dosierung der Brennstoffe verhindert wird und gegebenenfalls eine völlige Unterbrechung der Kraftstoff- bzw. Heizmittelzufuhr eintritt.

Neben den klassischen Methoden zur Beseitigung der auskristallisierten Paraffine (thermisch, mechanisch oder mit Lösungsmitteln), die sich lediglich auf die Entfernung der bereits gebildeten Ausfällungen beziehen, wurden in den letzten Jahren chemische Additive (sogenannten Fließverbesserer oder Paraffin-Inhibitoren) entwickelt, die durch physikalisches Zusammenwirken mit den ausfallenden Paraffinkristallen dazu führen, daß deren Form, Größe und Adhäsionseigenschaften modifiziert werden. Die Additive wirken dabei als zusätzliche Kristallkeime und kristallisieren teilweise mit den Paraffinen aus, wodurch eine größere Anzahl von kleineren Paraffinkristallen mit veränderter Kristallform resultiert. Ein Teil der Wirkung der Additive wird auch durch eine Dispergierung der Paraffinkristalle erklärt. Die modifizierten Paraffinkristalle neigen weniger zur Agglomeration, so daß sich die mit diesen Additiven versetzten Öle noch bei Temperaturen pumpen bzw. verarbeiten lassen, die oft mehr als 20° tiefer liegen als bei nichtadditivierten Ölen.

Das Fließ- und Kälteverhalten von Mineralölen und Mineralöldestillaten wird durch Angabe des Pour-Points (bestimmt nach ISO 3016) und des Cold-Filter-Plugging-Points (CFPP; bestimmt nach EN 116) beschrieben. Beide Kenngrößen werden in °C gemessen.

Typische Fließverbesserer für Rohöle und Mitteldestillate sind Copolymerisate des Ethylens mit Carbonsäureestern des Vinylalkohols. So setzt man nach der DE-A-11 47 799 Erdöldestillat-Treib- bzw. -Brennstoffen mit einem Siedepunkt zwischen etwa 120 und 400°C öllösliche Mischpolymerisate aus Ethylen und Vinylacetat mit einem Molekulargewicht zwischen etwa 1.000 und 3.000 zu. Bevorzugt werden Mischpolymerisate, die etwa 60 bis 99 Gew.-% Ethylen und etwa 1 bis 40 Gew.-% Vinylacetat enthalten. Sie sind besonders wirksam, wenn sie durch radikalische Polymerisation in einem inerten Lösungsmittel bei Temperaturen von etwa 70 bis 130°C und Drücken von 35 bis 2.100 atü hergestellt wurden (DE-A-19 14 756).

Andere als Fließverbesserer eingesetzte Polymerisate enthalten neben Ethylen und Vinylacetat z.B. Hexen-1 (vgl. EP-A-0 184 083), Diisobutylen (vgl. EP-A-0 203 554) oder ein Isoolefin der Formel 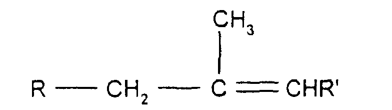 wobei R und R' gleich oder verschieden sind und Wasserstoff oder C₁-C₄-Alkylreste bedeuten (EP-A-0 099 646). Auch Mischpolymerisate aus Ethylen, Alkencarbonsäureester und/oder Vinylester und Vinylketon werden als Stockpunkterniedriger und zur Verbesserung des Fließverhaltens von Rohölen und Mitteldestillaten der Rohöle verwendet (EP-A-0 111 983).

Daneben werden auch Copolymere auf der Basis von α,β-ungesättigten Verbindungen und Maleinsäureanhydrid als Fließverbesserer verwendet. DE-196 45603 beschreibt Copolymere aus 60 bis 99 mol -% von Ethylen abgeleiteten Struktureinheiten und 1 bis 40 mol-% aus Struktureinheiten, die sich von der Maleinsäure, ihrem Anhydrid oder dessen Imiden ableiten. Der Nachteil bei der Verwendung solcher Verbindungen besteht in dem aufwendigen Herstellverfahren durch Hochdruckmassecopolymerisation von Ethylen und Maleinsäureanhydrid und nachfolgender Imidierung der Anhydridgruppen.

DE-1 162 630 offenbart Copolymerisate aus Ethylen und Vinylestern von geradkettigen Fettsäuren mit 4 bis 18 Kohlenstoffatomen als stockpunkterniedrigendes Additiv für Erdöldestillate. Neocarbonsäuren finden keine Erwähnung.

EP-A-0 217 602 offenbart Ethylen-Copolymere mit C₁- bis C₁₈-Alkylresten tragenden Vinylestern als Fließverbesserer für Mineralöldestillate mit Siedebereichen (90-20)% von unter 100°C.

EP-A-0 648 256 offenbart unter anderem Copolymere aus Ethylen und Vinylestern von C₁-C₂₈-Carbonsäuren, aber ebenfalls keine Neocarbonsäuren.

EP-A-0 493 769 offenbart Terpolymere, die aus Ethylen, Vinylacetat und Neononan- bzw. Neodecanvinylester hergestellt werden, sowie ihre Verwendung als Additive für Mineralöldestillate.

EP-A-0 584 651 offenbart Copolymerisate von Ethylen mit einer tertiären, gesättigten Carbonsäure zur Herstellung von Folien, die einen Schmelzindex MFI (190/2,16) von 0,1 bis 50 g/10 min aufweisen. Derartige Copolymerisate sind wegen ihres hohen Molekulargewichts und ihrer geringen Löslichkeit aber für die Verwendung als Mineralöladditive ungeeignet.

EP-A-0 746 598 offenbart Copolymerisate von Ethylen und Di-Alkylfumaraten in Mischung mit Mineralölen, die einen Cloud Point von unterhalb -10°C aufweisen.

Die Wirksamkeit der bekannten Zusatzstoffe zur Verbesserung der Eigenschaften von Mineralölfraktionen ist u.a. abhängig von der Herkunft des Mineralöls, aus dem sie gewonnen wurden und damit insbesondere von dessen Zusammensetzung. Additive, die zur Einstellung bestimmter Eigenschaftswerte von Fraktionen eines Rohöls hervorragend geeignet sind, können daher bei Destillaten von Rohölen anderen Ursprungs zu völlig unbefriedigenden Ergebnissen führen.

Inzwischen stehen Additive zur Verfügung, die einen breiten Anwendungsbereich haben, d.h. die Fließeigenschaften von Mineralölen und Mineralölfraktionen unterschiedlicher Herkunft bei tiefen Temperaturen deutlich verbessern. Dennoch gibt es Fälle, in denen sie sich als wenig oder gar nicht brauchbar erweisen, beispielsweise weil sie nur wenig zur Erhöhung der Fließfähigkeit in der Kälte beitragen. Die Ursachen hierfür sind vielfältig; die Erschließung bisher nicht genutzter Rohstoffe, die geänderte Verarbeitung der Primärprodukte und neue Anforderungen des Marktes seien als Beispiele genannt.

Insbesondere Dieselkraftstoffe die sich durch eine verminderte Umweltbelastung bei der Verbrennung auszeichnen, durch einen sehr geringen Schwefelgehalt von weniger als 500 ppm und insbesondere weniger als 100 ppm und einen niedrigen Aromatengehalt charakterisiert sind, lassen sich mit herkömmlichen Fließverbesserern nicht oder nur ungenügend additivieren. Probleme bereiten dabei vor allem die für den Einsatz unter arktischen Bedingungen hergestellten Winterqualitäten von Dieselkraftstoffen mit ihren extremen Kälteeigenschaften, wie z.B. einem Cloud Point kleiner -10°C und insbesondere kleiner -15°C, sehr engen Destillationsschnitten mit Siedebereichen von 20 bis 90 Vol.-% kleiner 100°C, insbesondere kleiner 80°C und teilweise auch kleiner 60°C, und einem auf ca. 360°C und insbesondere auf ca. 320°C begrenzten Siedeende. Die Kälteeigenschaften solcher Destillate können derzeit nur über die Zugabe von leichter siedenden, paraffinarmen Komponenten, wie z.B. Kerosin, zufriedenstellend verbessert werden.

Es bestand daher die Aufgabe, neue Additive zur Verbesserung der Fließfähigkeit solcher Erdölarten oder Erdölfraktionen zu entwickeln, bei denen die Additive des Standes der Technik nur unbefriedigend wirken. Weiterhin bestand die Aufgabe darin, solche Additive zu finden, die in einem weniger aufwendigen Verfahren herstellbar sind, als es beispielsweise bei den Imidderivaten der Maleinsäure als Comonomer der Fall ist.

Die vorliegende Erfindung löst diese Aufgabe durch Bereitstellen von Fließverbesseren für Mineralöle, die Copolymerisate von Ethylen mit den Vinylestem tertiärer Carbonsäuren, im folgenden auch Neocarbonsäuren genannt, enthalten.

Gegenstand der Erfindung sind Lösungen oder Dispersionen mit einem Gehalt von 1 bis 90 Gew.-% an Copolymeren aus niederen Olefinen und Vinylestern mit Schmelzviskositäten bei 140°C von 20 bis 2000 ^{mPas}, enthaltend
a) 85 bis 97 mol-% bivalente Struktureinheiten der Formel 1

   -CH₂-CR¹R²- 1

   worin R¹ und R² unabhängig voneinander Wasserstoff oder Methyl bedeuten, und
b) mindestens 3 mol-% bivalente Struktureinheiten der Formel 2 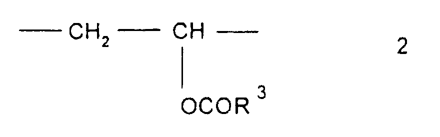 worin R³ gesättigtes, verzweigtes C₆-C₁₆-Alkyl bedeutet, das ein tertiäres Kohlenstoffatom aufweist, dadurch gekennzeichnet, daß R³ mit seinem ertiären Kohlenstoffatom an die Carboxylfunktion gebunden ist mit der Maßgabe, daß das Copolymer maximal 4 Gew.-% vom Vinylacetat abgeleitete Struktureinheiten umfaßt, in aliphatischen und/oder aromatischen Kohlenwasserstoffen oder kohlenwasserstoffgemischen.

R¹ und R² bedeuten vorzugsweise Wasserstoff. R³ bedeutet vorzugsweise einen Neoalkylrest mit 7 bis 11 Kohlenstoffatomen, insbesondere einen Neoalkylrest mit 8, 9 oder 10 Kohlenstoffatomen. Die Neoalkylsäuren, von denen sich die oben genannten Neoalkylreste ableiten lassen, werden durch die Formel 3 beschrieben:

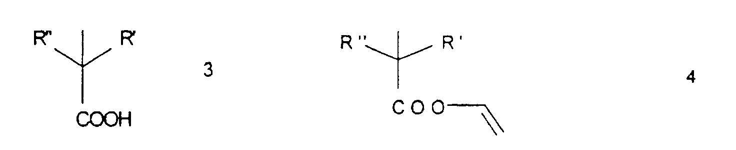

R' und R" sind Alkylreste mit zusammen vorzugsweise 5 bis 9, insbesondere 6, 7 oder 8 Kohlenstoffatomen. Der zur Copolymerisation verwendete Vinylester hat demzufolge die Formel 4:

Das erfindungsgemäße Copolymer besteht vorzugsweise aus höchstens 15, insbesondere 5 bis 10 mol-% Struktureinheiten der Formel 2.

Die erfindungsgemäßen Copolymere sind durch die üblichen Copolymerisationsverfahren wie beispielsweise Suspensionspolymerisation, Lösungsmittelpolymerisation, Gasphasenpolymerisation oder Hochdruckmassepolymerisation herstellbar. Bevorzugt ist dabei die Hochdruckmassepolymerisation bei Drucken von vorzugsweise 50 bis 400, insbesondere 100 bis 300 MPa und Temperaturen von vorzugsweise 50 bis 300, insbesondere 100 bis 250°C. Die Reaktion der Monomeren wird durch Radikale bildende Initiatoren (Radikalkettenstarter) eingeleitet. Zu dieser Substanzklasse gehören z.B. Sauerstoff, Hydroperoxide, Peroxide und Azoverbindungen wie Cumolhydroperoxid, t-Butylhydroperoxid, Dilauroylperoxid, Dibenzoylperoxid, Bis(2-ethylhexyl)peroxiddicarbonat, t-Butylperpivalat, t-Butylpermaleinat, t-Butylperbenzoat, Dicumylperoxid, t-Butylcumylperoxid, Di-(t-butyl)peroxid, 2,2'-Azo-bis(2-methylpropanonitril), 2,2'-Azo-bis(2-methylbutyronitril). Die Initiatoren werden einzeln oder als Gemisch aus zwei oder mehr Substanzen in Mengen von 0,001 bis 20 Gew.-%, vorzugsweise 0,01 bis 10 Gew.-%, bezogen auf das Monomerengemisch, eingesetzt.

Die erfindungsgemäßen Copolymere haben Schmelzviskositäten bei 140°C von 20 bis 2000 mPas.

Die gewünschte Schmelzviskosität der Copolymerisate wird bei gegebener Zusammensetzung des Monomerengemisches durch Variation der Reaktionsparameter Druck und Temperatur und gegebenenfalls durch Zusatz von Moderatoren eingestellt. Als Moderatoren haben sich Wasserstoff, gesättigte oder ungesättigte Kohlenwasserstoffe, z.B. Propan, Aldehyde, z.B. Propionaldehyd, n-Butyraldehyd oder Isobutyraldehyd, Ketone, z.B. Aceton, Methylethylketon, Methylisobutylketon, Cyclohexanon oder Alkohole, z.B. Butanol, bewährt. In Abhängigkeit von der angestrebten Viskosität werden die Moderatoren in Mengen bis zu 20 Gew.-%, vorzugsweise 0,05 bis 10 Gew.-%, bezogen auf das Monomerengemisch, angewandt.

Die für die Herstellung der erfindungsgemäßen Copolymere geeigneten Comonomere sind insbesondere Neooctan-, Neononan-, Neodecan-, Neoundecanund Neododecansäurevinylester. Diese Ester sind beispielsweise durch Vinylierung der durch die Kochsche Carbonsäuresynthese aus Olefinen, CO und H₂O zugänglichen Neocarbonsäuren darstellbar (Römpp: Chemie-Lexikon, Thieme-Verlag, 9. Auflage, S. 4881 und 4901).

Die erfindungsgemäßen Copolymere können bis zu 4 Gew.-% Vinylacetat oder bis zu 5 mol-% weiterer Comonomere enthalten. Solche Comonomere können beispielsweise Vinylester, Vinylether, Acrylsäurealkylester, Methacrylsäurealkylester oder höhere Olefine mit mindestens 5 Kohlenstoffatomen sein. Bevorzugt als höhere Olefine sind Hexen, 4-Methylpenten, Octen oder Diisobutylen.

Um Copolymerisate der beanspruchten Zusammensetzung zu erhalten verwendet man Monomerengemische, die außer Ethylen und gegebenenfalls einem Moderator 1 bis 50 Gew.-%, vorzugsweise 3 bis 40 Gew.-% Vinylester enthalten.

Mit der von der Zusammensetzung des Copolymerisats abweichenden Zusammensetzung des Monomerengemisches trägt man der unterschiedlichen Polymerisationsgeschwindigkeit der Monomeren Rechnung. Die Polymerisate fallen als farblose Schmelzen an, die bei Raumtemperatur zu wachsartigen Feststoffen erstarren.

Die Hochdruckmassepolymerisation wird in bekannten Hochdruckreaktoren, z.B. Autoklaven oder Rohrreaktoren, diskontinuierlich oder kontinuierlich durchgeführt, besonders bewährt haben sich Rohrreaktoren. Lösungsmittel wie aliphatische und/oder aromatische Kohlenwasserstoffe oder Kohlenwasserstoffgemische, Benzol oder Toluol, können im Reaktionsgemisch enthalten sein. Bevorzugt ist die lösungsmittelfreie Arbeitsweise. In einer bevorzugten Ausführungsform der Polymerisation wird das Gemisch aus den Monomeren, dem Initiator und, sofern eingesetzt, dem Moderator, einem Rohrreaktor über den Reaktoreingang sowie über einen oder mehrere Seitenäste zugeführt. Hierbei können die Monomerenströme unterschiedlich zusammengesetzt sein (EP-A-0 271 738).

Die erfindungsgemäßen Copolymerisate werden Mineralölen oder Mineralöldestillaten in Form von Lösungen oder Dispersionen zugesetzt. Diese Lösungen oder Dispersionen enthalten vorzugsweise 1 bis 90, insbesondere 10 bis 80 Gew.-% der erfindungsgemäßen Copolymerisate. Geeignete Lösungs- oder Dispersionsmittel sind aliphatische und/oder aromatische Kohlenwasserstoffe oder Kohlenwasserstoffgemische, z.B. Benzinfraktionen, Kerosin, Decan, Pentadecan, Toluol, Xylol, Ethylbenzol oder kommerzielle Lösungsmittelgemische wie Solvent Naphtha, ®Shellsoll AB, ®Solvesso 150, ®Solvesso 200, ®Exxsol, ®ISOPAR- und ®Shellsol D-Typen. Durch die neuen polymeren Verbindungen in ihren rheologischen Eigenschaften verbesserte Mineralöle oder Mineralöldestillate enthalten 0,001 bis 2, vorzugsweise 0,005 bis 0,5 Gew.-% Copolymerisat, bezogen auf das Destillat.

Die erfindungsgemäßen Copolymerisate können als Fließverbesserer weiterhin in Form von Mischungen verwendet werden, die aus Polymeren der beanspruchten Art, jedoch unterschiedlicher qualitativer und/oder quantitativer Zusammensetzung und/oder unterschiedlicher (bei 140°C gemessener) Viskosität bestehen. Das Mischungsverhältnis (in Gewichtsteilen) der Copolymeren kann über einen weiten Bereich variiert werden und z.B. 20:1 bis 1:20, vorzugsweise 10:1 bis 1:10 betragen. Auf diesem Wege lassen sich die Fließverbesserer gezielt individuellen Anforderungen anpassen.

Mit dem gleichen Ergebnis, die Wirksamkeit als Fließverbesserer für bestimmte Substrate zu optimieren, können die erfindungsgemäßen Copolymerisate auch zusammen mit einem oder mehreren öllöslichen Co-Additiven eingesetzt werden, die bereits für sich allein die Kaltfließeigenschaften von Rohölen, Schmierölen oder Brennölen verbessern. Beispiele solcher Co-Additive sind polare Verbindungen, die ein Paraffindispergierung bewirken (Paraffindispergatoren), sowie Kammpolymere.

So können die neuen Copolymerisate in Mischung mit Paraffindispergatoren eingesetzt werden. Diese Additive reduzieren die Größe der Paraffinkristalle und bewirken, daß die Paraffinpartikel sich nicht absetzen, sondern kolloidal mit deutlich reduziertem Sedimentationsbestreben, dispergiert bleiben. Als Paraffindispergatoren haben sich öllösliche polare Verbindungen mit ionischen oder polaren Gruppen, z.B. Aminsalze und/oder Amide bewährt, die durch Reaktion aliphatischer oder aromatischer Amine, vorzugsweise langkettiger aliphatischer Amine, mit aliphatischen oder aromatischen Mono-, Di-, Tri- oder Tetracarbonsäuren oder deren Anhydriden erhalten werden (vgl. US-4 211 534). Andere Paraffindispergatoren sind Copolymere des Maleinsäureanhydrids und α,β-ungesättigten Verbindungen, die gegebenenfalls mit primären Monoalkylaminen und/oder aliphatischen Alkoholen umgesetzt werden können (vgl. EP-A-0 154 177), die Umsetzungsprodukte von Alkenylspirobislactonen mit Aminen (vgl. EP-A-0 413 279) und nach EP-A-0 606 055, Umsetzungsprodukte von Terpolymerisaten auf Basis α,β-ungesättigter Dicarbonsäureanhydride, α,β-ungesättigter Verbindungen und Polyoxyalkenylether niederer ungesättigter Alkohole.

Schließlich werden in einer weiteren Ausführungsform der Erfindung die neuen Copolymerisate zusammen mit Kammpolymeren als Fließverbesserer verwendet. Hierunter versteht man Polymere, bei denen Kohlenwasserstoffreste mit mindestens 8, insbesondere mindestens 10 Kohlenstoffatomen an einem Polymerrückgrat gebunden sind. Vorzugsweise handelt es sich um Homopolymeren, deren Alkylseitenketten mindestens 8 und insbesondere mindestens 10 Kohlenstoffatome enthalten. Bei Copolymeren weisen mindestens 20 %, bevorzugt mindestens 30 % der Monomeren Seitenketten auf (vgl. Comb-like Polymers - Structure and Properties; N.A. Plate and V.P. Shibaev, J. Polym. Sci. Macromolecular Revs. 1974, 8, 117 ff). Beispiele für geeignete Kammpolymere sind z.B. Fumarat/Vinylacetat-Copolymere (vgl. EP-A- 0 153 176), Copolymere aus einem C₆-C₂₄-α-Olefin und einem N-C₆- bis C₂₂-Alkylmaleinsäureimid (vgl. EP-A-0 320 766), ferner veresterte Olefin/Maleinsäureanhydrid-Copolymere, Polymere und Copolymere von α-Olefinen und veresterte Copolymere von Styrol und Maleinsäureanhydrid.

Das Mischungsverhältnis (in Gewichtsteilen) der erfindungsgemäßen Copolymerisaten mit Paraffindispergatoren bzw. Kammpolymeren beträgt jeweils 1:10 bis 20:1, vorzugsweise 1:1 bis 10:1.

Die neuen Copolymerisate und ihre Mischungen untereinander sowie mit Co-Additiven können allein oder auch zusammen mit anderen Zusatzstoffen verwendet werden, beispielsweise mit Entwachsungshilfsmitteln, Korrosionsinhibitoren, Antioxidantien, Lubricity-Additiven oder Schlamminhibitoren. Sie bewirken eine CFPP-Absenkung an Ölen mit extremen Kälteeigenschaften, bei denen herkömmliche Additive keine bzw. eine CFPP-erhöhende Wirkung zeigen.

### Beispiele

### Herstellung der erfindungsgemäßen Copolymere

Ethylen und Neodecansäurevinylester (=®VeoVa10, Shell Chemicals) (Beispiele 1 bis 4) bzw. Neoundecansäurevinylester (=®VeoVa11, Shell Chemicals) (Beispiele 5 und 6) wurden unter Zusatz von Propionaldehyd als Molekulargewichtsregler (Moderator) in einem Hochdruckautoklaven polymerisiert. Hierzu wurde das Monomerengemisch, dem als Initiator Bis(2-ethylhexyl)peroxidicarbonat (15 Gew.-% gelöst in Testbenzin) zugesetzt worden ist, unter dem Reaktionsdruck von 150 MPa in den Reaktor bei 190°C eingespeist. Die Verweilzeit der Reaktanten im Autoklaven betrug ca. 2 Minuten. In Tabelle 1, sind die Polymerisationsbedingungen, in Tabelle 2 die Eigenschaften der erhaltenen Terpolymerisate zusammengestellt.

Rotationsviskosimeter (Haake RV 20 mit Platte-Kegler-Meßsystem) bei 140°C.

Vor der Charakterisierung der Polymerisate wurden flüchtige Bestandteile durch Trocknung der aus den Umsetzungen anfallenden Rohprodukte bei 150°C unter reduziertem Druck (10 mbar) über 2 Stunden entfernt.

Die Gehalt an Neodecansäurevinylester wurde durch Pyrolyse des Polymerisats bestimmt. Hierzu wird das Copolymerisat bei 450°C in einem geschlossenen System unter Vakuum thermisch gespalten. Pyrolysat und Rückstand werden in Toluol gelöst und nach Zugabe von 2-Propanol mit einer Lösung von KOH in Ethanol (0,1 mol KOH je Liter Lösung) potentiometrisch bis zum Äquivalenzpunkt titriert. Der KOH-Verbrauch entspricht dem Neodecansäurevinylestergehalt.

**Tabelle 1**

| Herstellung der Copolymere | | | | | |
|---|---|---|---|---|---|
| Beispiel | Edukte (Gew.-%) | | Initiator (Gew.-ppm bez. auf Ethylen) | Moderator (Gew.-% bez. auf Monomere) | Ausbeute |
| | C₂H₄ | VeoVa10/11 | | | |
| 1 | 70 | 30 | 250 | 4,0 | 17% |
| 2 | 60 | 40 | 375 | 3,1 | 18% |
| 3 | 50 | 50 | 450 | 2,4 | 20% |
| 4 | 40 | 60 | 950 | 1,8 | 23% |
| 5 | 60 | 40 | 400 | 5,5 | 19% |
| 6 | 65 | 35 | 350 | 5,5 | 18% |

**Tabelle 2**

| Charakterisierung der Copolymerisate | | | |
|---|---|---|---|
| Beispiel Nr. | VeoVa 10/11 | | V₁₄₀ |
| | Gew.-% | mol-% | |
| 1 | 26,4 | 4,8 | 124 |
| 2 | 34,9 | 7,0 | 203 |
| 3 | 43,3 | 9,7 | 238 |
| 4 | 53,4 | 13,8 | 268 |
| 5 | 37,3 | 7,3 | 84 |
| 6 | 30,1 | 5,4 | 75 |

### Wirksamkeit der Copolymerisate

In Tabelle 3 wird die Wirksamkeit der nach den Herstellungsbeispielen erhaltenen Additive als Fließverbesserer für Mineralöldestillate an Hand des CFPP-Tests (Cold Filter Plugging Test nach EN 116) in verschiedenen Destillaten skandinavischer Raffinerien beschrieben. Die Additive wurden als 50 %ige Lösungen in Solvent Naphtha eingesetzt. Als Vergleich sind die Wirksamkeit eines handelsüblichen Ethylen-Vinylacetat-Copolymers (EVA-Copolymer) mit 32 Gew.-% (13,3 mol-%) Vinylacetat und einer Schmelzviskosität V₁₄₀ von 125 mPas und eines handelsüblichen Ethylen-Vinylacetat-Neodecansäurevinylester-Terpolymers mit 35 Gew.-% (16 mol-%) Vinylacetat, 6 Gew.-% (1,2 mol-%) Neodecansäurevinylester und einer Schmelzviskosität V₁₄₀ von 140 mPas angegeben.

**Tabelle 3:**

| | Testöl 1 | Testöl 2 | Testöl 3 | Testöl 4 | Testöl 5 |
|---|---|---|---|---|---|
| Siedebeginn | 195°C | 127°C | 190°C | 183°C | 192°C |
| 20 % | 226°C | 193°C | 219°C | 226°C | 218°C |
| 30 % | 232°C | 204°C | 227°C | 237°C | 225°C |
| 90 % | 280°C | 318°C | 291°C | 330°C | 288°C |
| Siedeende | 311°C | 334°C | 318°C | 354°C | 310°C |
| Cloud Point | -30°C | -23°C | -24°C | -9°C | -28°C |
| CFPP | -31°C | -23°C | -29°C | -12°C | -34°C |

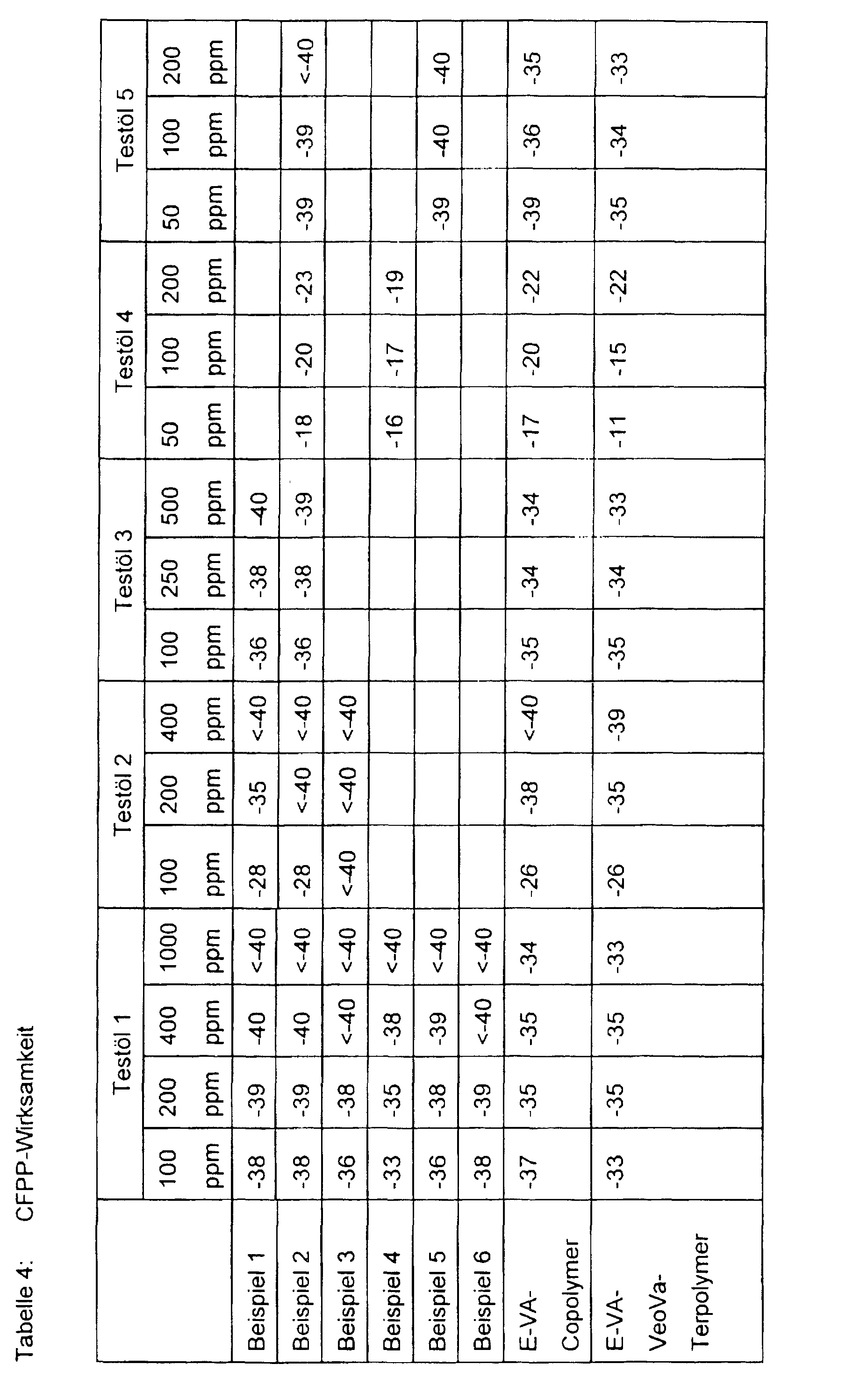

### Liste der verwendeten Handelsbezeichnungen

- Solvent Naphtha ®Shellsol AB ®Solvesso 150: aromatische Lösemittelgemische mit Siedebereich 180 bis 210°C
- ®Solvesso 200: aromatisches Lösemittelgemisch mit Siedebereich 230 bis 287°C
- ®Exxsol: Dearomatisierte Lösemittel in verschiedenen Siedebereichen, beispielsweise ®Exxsol D60: 187 bis 215°C
- ®ISOPAR (Exxon): isoparaffinische Lösemittelgemische in verschiedenen Siedebereichen, beispielsweise ®ISOPAR L: 190 bis 210°C
- ®Shellsol D: hauptsächlich aliphatische Lösemittelgemische in verschiedenen Siedebereichen

## Patentansprüche

1. Lösungen oder Dispersionen mit einem Gehalt von 1 bis 90 Gew.-% an Copolymeren aus niederen Olefinen und Vinylestern mit Schmelzviskositäten bei 140°C von 20 bis 2.000 mPas, enthaltend
a) 85 bis 97 mol-% bivalente Struktureinheiten der Formel 1
-CH₂-CR¹R²- 1
worin R¹ und R² unabhängig voneinander Wasserstoff oder Methyl bedeuten, und
b) mindestens 3 mol-% bivalente Struktureinheiten der Formel 2 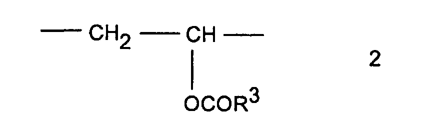 worin R³ gesättigtes, verzweigtes C₆-C₁₆-Alkyl bedeutet, das ein tertiäres Kohlenstoffatom aufweist, **dadurch gekennzeichnet, daß** R³ mit seinem tertiären Kohlenstoffatom an die Carboxylfunktion gebunden ist
mit der Maßgabe, daß das Copolymer maximal 4 Gew.-% vom Vinylacetat abgeleitete Struktureinheiten umfaßt,
in aliphatischen und/oder aromatischen Kohlenwasserstoffen oder Kohlenwasserstoffgemischen.

2. Lösungen oder Dispersionen nach Anspruch 1, **dadurch gekennzeichnet, daß** R¹ und R² Wasserstoff bedeuten.

3. Lösungen oder Dispersionen nach Anspruch 1 und/oder 2, **dadurch gekennzeichnet, daß** R³ einen Neoalkylrest mit 7 bis 11 Kohlenstoffatomen, insbesondere einen Neoalkylrest mit 8, 9 oder 10 Kohlenstoffatomen bedeutet.

4. Lösungen oder Dispersionen nach einem oder mehreren der Ansprüche 1 bis 3, **dadurch gekennzeichnet, daß** sie höchstens 15, insbesondere 5 bis 10 mol-% der bivalenten Struktureinheiten der Formel 2 enthalten.

5. Lösungen oder Dispersionen nach einem oder mehreren der Ansprüche 1 bis 4, **dadurch gekennzeichnet, daß** sie Schmelzviskositäten bei 140°C von 30 bis 2000 mPas, speziell von 50 bis 2000 mPas aufweisen.

6. Lösungen oder Dispersionen nach einem oder mehreren der Ansprüche 1 bis 5, **dadurch gekennzeichnet, daß** sie bis zu 5 mol-% weiterer Comonomere enthalten.

7. Lösungen oder Dispersionen nach Anspruch 6, **dadurch gekennzeichnet, daß** sie als weitere Comonomere Vinylester außer Vinylacetat, Vinylether, Acrylsäurealkylester, Methacrylsäurealkylester oder höhere Olefine mit mindestens 5 Kohlenstoffatomen, bevorzugt Hexen, 4-Methylpenten, Octen oder Diisobutylen, enthalten.

8. Lösungen oder Dispersionen nach einem oder mehreren der Ansprüche 1 bis 7, zusätzlich enthaltend Paraffindispergatoren oder Kammpolymere, oder beides.

9. Verwendung von Lösungen oder Dispersionen nach einem oder mehreren der Ansprüche 1 bis 7 als Additiv zur Verbesserung der Kaltfließeigenschaften von Mineralölen.

10. Brennstofföle, enthaltend Mineralöle oder Mineralöldestillate mit 0,001 bis 2 Gew.-% Copolymeren gemäß einem oder mehreren der Ansprüche 1 bis 7, bezogen auf das Destillat.

## Revendications

1. Solutions ou dispersions avec une teneur de 1 à 90 % en poids de copolymères d'oléfines de bas poids moléculaire et d'esters de vinyle avec des viscosités à l'état fondu à 140°C de 20 à 2 000 mPas, contenant
a) 85 à 97 % en mole de motifs de structure bivalents de formule 1
-CH₂-CR¹R²- 1
dans laquelle R¹ et R² représentent indépendamment l'un de l'autre un atome d'hydrogène ou un groupe méthyle, et
b) au moins 3 % en mole de motifs de structure bivalents de formule 2 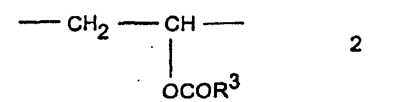 dans laquelle R³ représente un groupe alkyle saturé, ramifié, en C₆ à C₁₆, qui présente un atome de carbone tertiaire, **caractérisés en ce que** R³ est lié avec son atome de carbone tertiaire sur la fonction carboxyle avec la condition que le copolymère contienne au maximum 4 % en poids de motifs de structure dérivés de l'acétate de vinyle,
dans des hydrocarbures ou des mélanges d'hydrocarbures aliphatiques et/ou aromatiques.

2. Solutions ou dispersions selon la revendication 1, **caractérisées en ce que** R¹ et R² représentent l'hydrogène.

3. Solutions ou dispersions selon la revendication 1 et/ou 2, **caractérisées en ce que** R³ représente un groupe néoalkyle avec de 7 à 11 atomes de carbone, en particulier un groupe néoalkyle avec 8, 9 ou 10 atomes de carbone.

4. Solutions ou dispersions selon une ou plusieurs des revendications 1 à 3, **caractérisées en ce qu'**elles contiennent au plus 15, en particulier de 5 à 10 % en mole des motifs de structure bivalents de formule 2.

5. Solutions ou dispersions selon une ou plusieurs des revendications 1 à 4, **caractérisées en ce qu'**elles présentent des viscosités fondues à 140°C de 30 à 2000 mPas, en particulier de 50 à 2000 mPas.

6. Solutions ou dispersions selon une ou plusieurs des revendications 1 à 5, **caractérisées en ce qu'**elles contiennent jusqu'à 5 % en mole d'autres co-monomères.

7. Solutions ou dispersions selon la revendication 6, **caractérisées en ce qu'**elles contiennent comme autres co-monomères des esters de vinyle autre que l'acétate de vinyle, des éthers de vinyle, des acrylates d'alkyle, des méthacrylates d'alkyle ou des oléfines de poids moléculaire élevé ayant au moins 5 atomes de carbone, de préférence l'hexène, le 4-méthylpentène, l'octène ou le diisobutylène.

8. Solutions ou dispersions selon une ou plusieurs des revendications 1 à 7, contenant en plus des agents de dispersion de la paraffine ou des polymères en peigne, ou les deux.

9. Utilisation de solutions ou dispersions selon une ou plusieurs des revendications 1 à 7 comme additif pour l'amélioration des caractéristiques d'écoulement à froid d'huiles minérales.

10. Huiles combustibles contenant des huiles minérales ou des distillats d'huiles minérales ayant 0,001 à 2 % en poids de copolymères selon une ou plusieurs des revendications 1 à 7, par rapport au distillat.

## Claims

1. A solution or dispersion containing from 1 to 90% by weight of copolymers of lower olefins and vinyl esters having melt viscosities at 140°C of from 20 to 2000 mPas
a) from 85 to 97 mol% of bivalent structural units of the formula 1
- CH₂ - CR¹R² - 1
in which R¹ and R², independently of one another, are hydrogen or methyl, and
b) at least 3 mol% of bivalent structural units of the formula 2 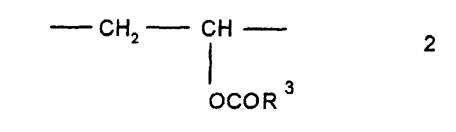 in which R³ is saturated, branched C₆-C₁₆-alkyl which has a tertiary carbon atom, wherein R³ is bonded by its tertiary carbon atom to the carboxyl function,
with the proviso that the copolymer comprises at most 4% by weight of structural units derived from vinyl acetate,
in aliphatic and/or aromatic hydrocarbons or hydrocarbon mixtures.

2. The solution or dispersion as claimed in claim 1, wherein R¹ and R² are hydrogen.

3. The solution or dispersion as claimed in claim 1 and/or 2, wherein R³ is a neoalkyl radical having 7 to 11 carbon atoms, in particular a neoalkyl radical having 8, 9 or 10 carbon atoms.

4. The solution or dispersion as claimed in one or more of claims 1 to 3, which contains not more than 15, in particular from 5 to 10, mol% of the bivalent structural units of the formula 2.

5. The solution or dispersion as claimed in one or more of claims 1 to 4, which has a melt viscosity at 140°C of from 30 to 2000 mPas, especially from 50 to 2000 mPas.

6. The solution or dispersion as claimed in one or more of claims 1 to 5, which contains up to 5 mol% of further comonomers.

7. The solution or dispersion as claimed in claim 6, which contains, as further comonomers, vinyl esters except vinyl acetate, vinyl ethers, alkyl acrylates, alkyl methacrylates or higher olefins having at least 5 carbon atoms, preferably hexene, 4-methylpentene, octene or diisobutylene.

8. The solution or dispersion as claimed in one or more of claims 1 to 7, additionally containing paraffin dispersants or comb-like polymers, or both.

9. The use of a solution or dispersion as claimed in one or more of claims 1 to 7 as an additive for improving the cold flow properties of mineral oils.

10. A fuel oil containing mineral oils or mineral oil distillates comprising from 0.001 to 2% by weight of copolymers as claimed in one or more of claims 1 to 7, based on the distillate.
